# EUROPEAN PATENT SPECIFICATION

(11) **EP 4 370 810 B1**
(45) Date of publication and mention of the grant of the patent: **27.08.2025**
(21) Application number: 22743591.4
(22) Date of filing: 13.07.2022
(51) Int. Cl.: F16F 15/124, F16F 15/12, F16D 3/70, H02K 7/00, H02K 7/116, B62K 5/027, B62K 5/10, B60K 7/00

(54) **ELECTRIC PROPULSION UNIT FOR SADDLE-TYPE VEHICLES HAVING TWO DRIVE WHEELS AND VEHICLE COMPRISING THE PROPULSION UNIT**
ELEKTRISCHE ANTRIEBSEINHEIT FÜR SATTELFAHRZEUGE MIT ZWEI ANTRIEBSRÄDERN UND FAHRZEUG MIT DER ANTRIEBSEINHEIT
UNITÉ DE PROPULSION ÉLECTRIQUE POUR VÉHICULES DE TYPE À SELLE POSSÉDANT DEUX ROUES D'ENTRAÎNEMENT ET VÉHICULE COMPRENANT L'UNITÉ DE PROPULSION

(30) Priority: 16.07.2021 IT 202100018839
(43) Date of publication of application: 22.05.2024
(73) Proprietor: PIAGGIO & C. S.P.A., 56025 Pontedera (PI) (IT)
(72) Inventor: RAFFAELLI, Andrea, 56025 Pontedera (PI) (IT); MARIOTTI, Walter, 56025 Pontedera (PI) (IT)
(74) Representative: Mannucci, Michele
(86) International application number: PCT/IB2022/056446
(87) International publication number: WO 2023/285980

(56) References cited:
- WO-A1-2019/194000
- WO-A1-2019/207879
- DE-A1- 102011 003 755
- US-A1- 2013 281 249
- US-A1- 2019 054 818
- US-A1- 2021 001 852
- US-B2- 10 500 941

## Description

### TECHNICAL FIELD

The present invention relates to a saddle-type vehicle. Embodiments described herein relate, in particular, to an electric propulsion unit provided with a differential and two axle-shafts for actuating two rear driving wheels, and to a saddle-type vehicle having two rear driving wheels and a tilting frame, to which one or more front steered wheels are connected.

### BACKGROUND ART

Electric-drive vehicles are increasingly used in order to reduce emissions of polluting gases from internal-combustion engines. Electrically propelled vehicles of small sizes have been especially developed, in particular saddle-type vehicles.

For example, US8789639 discloses a saddle-type vehicle having an electric motor that actuates a pair of rear driving wheels. The vehicle has also a front axle with only one steered front wheel. For transmitting power to the two rear driving wheels, a differential with two axle-shafts is provided, in particular a left axle-shaft for actuating the left rear driving wheel, and a right axle-shaft for actuating the right rear driving wheel. An electric motor transmits motion to the housing of the differential through a complex and bulky gear transmission.

In these known vehicles, the transmission from the electric motor to the differential constitutes an expensive and bulky component, adversely affecting the overall cost, the weight and the fuel consumption of the vehicle, also due to non-negligible power losses in the transmission. A vehicle according to the preamble of claim 1 is disclosed in WO-2019/194000.

There is a need for electric propulsion units and saddle-type vehicles that fully or partially overcome the drawbacks of the prior art propulsion units and vehicles.

### SUMMARY

A saddle-type vehicle according to the invention is defined in claim 1. The dependent claims relate to preferred additional features and embodiments. Specifically, the vehicle described herein comprises a tilting frame, at least one steered front wheel supported by the frame, and a propulsion unit. The propulsion unit comprises a casing; inside the casing, a differential is provided, connected to a left transmission axle-shaft and to a right transmission axle-shaft that are coaxial with each other and both rotating around a rotation axis. An electric motor is provided, integral with the casing and having a drive shaft with a rotation axis. The drive shaft is 90°-oriented with respect to the left axle-shaft and to the right axle-shaft. The propulsion unit is connected to a left rear driving wheel and to a right rear driving wheel through the left axle-shaft and the right axle-shaft, respectively. The left rear driving wheel, the right rear driving wheel and the propulsion unit are non-tilting relative.

As used herein, the terms "right" and "left" are merely conventional and have only descriptive purpose. They refer to the position relative to the driver, sitting on the saddle and facing the forward direction of the vehicle.

Thanks to the arrangement described above, a vehicle can be provided with a compact and efficient arrangement of the propulsion unit, with a limited number of mechanical members and therefore with less losses and high mechanical yield. The lower bulk allows not only lower costs but also reduced inertia.

A flexible coupling is provided between the drive shaft and the bevel gear drive which transmits the motion to the housing of the differential. The flexible coupling protects the bevel gear drive against peaks. Moreover, thanks to the flexible coupling there is no need for very precise tolerances for the coupling between motor and transmission. Small errors in parallelism and orthogonality are balanced by the deformable elements, typically made of rubber, thus making the production of the parts of the propulsion unit easier and less expensive, and the installation thereof simpler.

The pinion of the bevel gear drive transmitting motion from the electric motor to the housing of the differential are supported by support members installed in the casing and axially arranged in an intermediate position between the pinion and the first rotating member of the flexible coupling, with a particularly compact arrangement of small axial length. In particularly advantageous embodiments, the members supporting the pinion of the bevel gear drive are constituted by only one double-row bearing.

The casing of the propulsion unit may be constituted by two equal bodies coupled to each other along a median plane. This allows reducing the number of different parts to be manufactured for assembling the propulsion unit.

Further advantageous features and embodiments of the invention will be described in greater detail below with reference to the accompanying drawings and are defined in the attached claims, that form an integral part of the present description.

### BRIEF DESCRIPTION OF THE DRAWING

The invention will be better understood by following the description below and the attached drawing, showing a non-limiting embodiment of the invention. More specifically, in the drawing:
Fig. 1 is an axonometric view of a three-wheel vehicle with a propulsion unit according to the present description;
Fig. 2 is a side view of the vehicle of Fig. 1;
Fig. 3 is an axonometric view of propulsion unit of the vehicle of Figs. 1 and 2;
Fig. 4 is an axonometric view of the propulsion unit of Fig. 3, with a portion of the casing removed;
Fig. 5 shows an enlarged detail from Fig. 4;
Fig.6 is a cross-section of the propulsion unit according to a plane containing the axis of the electric motor;
Fig. 7 is an axonometric view of a flexible coupling interposed between the electric motor and the differential of the propulsion unit; and
Fig. 8 shows a cross-section of the propulsion unit and the rear driving wheels according to a plane containing the two axle-shafts of the wheels and the drive shaft.

### DETAILED DESCRIPTION

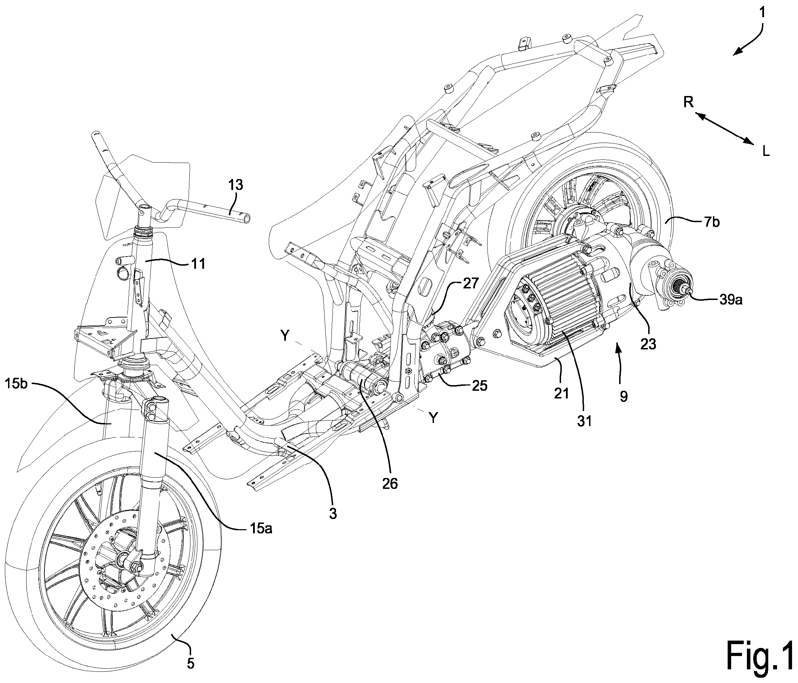

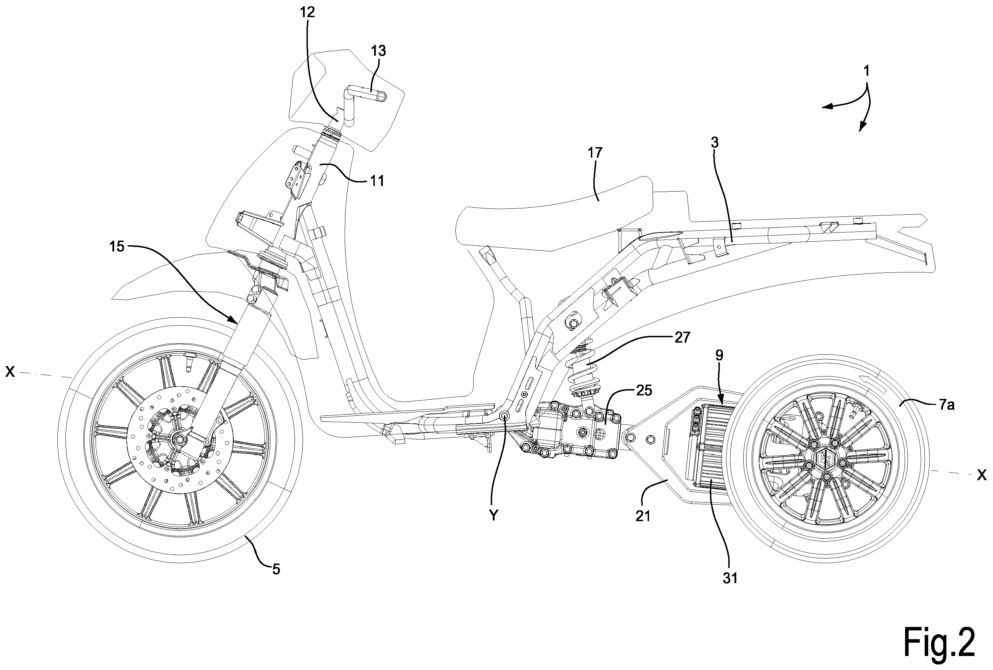

Figs. 1 and 2 schematically show a three-wheel saddle-type vehicle 1, comprising a propulsion unit, according to the present invention. The saddle-type vehicle 1 is a so-called tilting or rolling vehicle, i.e. a vehicle that can lean to the right and to the left around a roll axis, for example while moving along a curved trajectory. More specifically, the saddle-type vehicle 1 has a tilting or rolling frame 3, to which a steered front wheel 5 is connected. The frame 3 is connected to a non-tilting rear part of the vehicle 1, as described below. The non-tilting rear part comprises a left rear driving wheel 7a and a right rear driving wheel 7b. In Fig. 1, the left rear driving wheel has been omitted better to view the propulsion unit 9, with which the vehicle 1 is provided and which will be described in greater detail below.

The frame 3 comprises a steering sleeve 11, where a steering column, integral with a handlebar 13, is housed. The front steered wheel 5 is connected to the steering column 12, through the interposition of a suitable suspension 15. In the embodiment illustrated in the figures, the suspension 15 comprises two spring-shock absorber units 15a e 15b, respectively. The number 17 indicates a saddle of the saddle-type vehicle 1.

The propulsion unit 9 is connected to the frame 3 so that the frame can perform rolling movements, for example when turning, and springing movements relative to the rear driving wheels 7a, 7b that, together with the propulsion unit 9 and the front steered wheel 5, form the unsprung mass of the vehicle 1. In the embodiment illustrated in Figs. 1 and 2, the propulsion unit 9 is connected to the frame 3 through a connecting element 21 that is rigidly coupled to a casing 23 of the propulsion unit 9. The connecting element 21 is coupled to the frame 3 through a roll joint 25 defining a roll axis X-X (Fig. 2), around which the frame 3 can rotate relative to the connecting element 21.

In this way, the frame 3, the front steered wheel 5 with the corresponding suspension 15, the handlebar 13, the steering column 12, the steering sleeve 11 and the saddle 17 can perform a rolling movement around the axis X-X with respect to the propulsion unit 9 and the rear wheels 7a, 7b, that are non-tilting, i.e. that do not lean when the vehicle turns, for example.

As shown for example in Fig. 2, the roll joint 25 is arranged approximately aligned with the propulsion unit 9 and ahead thereof relative to the forward moving direction of the vehicle.

The roll joint 25 and the connecting element 21 can rotate relative to the frame 3 thanks to a pitching joint 26 having a pitching transverse axis Y-Y, i.e. an axis directed in right-left direction (arrow L-R in Fig. 1), orthogonal to the forward direction (arrow F, Fig. 2) of the vehicle 1. A rear suspension 27 is provided to damp the springing movement between the roll joint 25 and the frame 3. The transverse axis Y-Y may intersect the roll axis X-X. The transverse axis Y-Y is arranged ahead of the roll joint 25 relative to the forward moving direction of the vehicle 1.

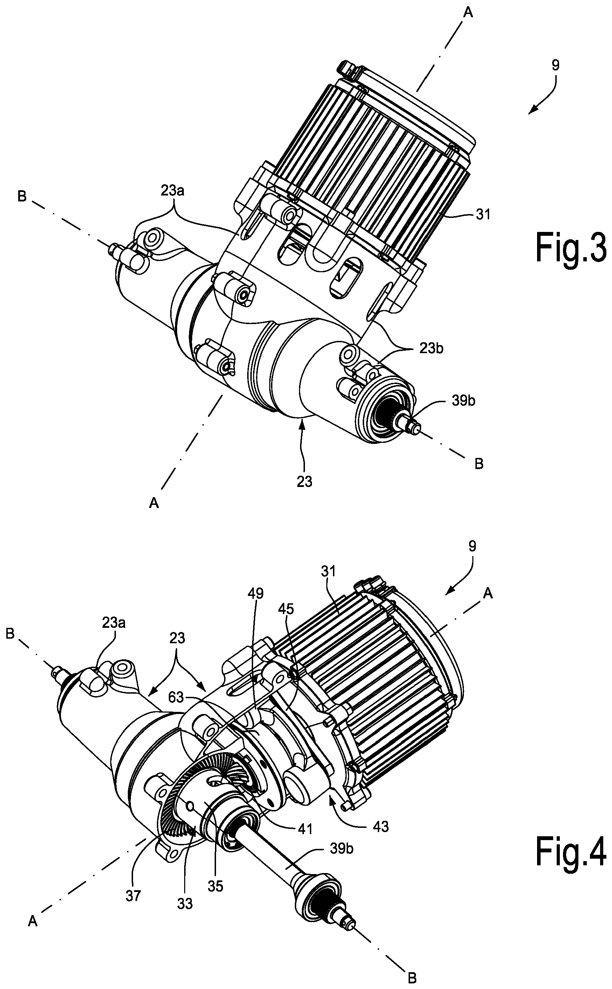

The details of the propulsion unit 9 are shown in Figs. 3 and following, and will be described in greater detail below.

In the illustrated embodiment, the propulsion unit 9 comprises the casing 23, to which the connecting element 21 is rigidly coupled (not shown in Figs. 3 and following), and an electric motor 31, flanged to the casing 23. The axis of the electric motor 31 is indicated with A-A. The axis A-A is orthogonal to an axis B-B representing the common rotation axis of the left rear driving wheel 7a and of the right rear driving wheel 7b.

In some embodiments, the axis A-A of the electric motor is parallel to the roll axis X-X and, if necessary, coincident therewith.

Therefore, in practical embodiments the roll joint 25 may be aligned with the electric motor 31.

In the illustrated embodiment, the casing 23 is formed by two components, respectively a left component 23a and a right component 23b, substantially equal to one another and coupled along a median plane of the vehicle 1.

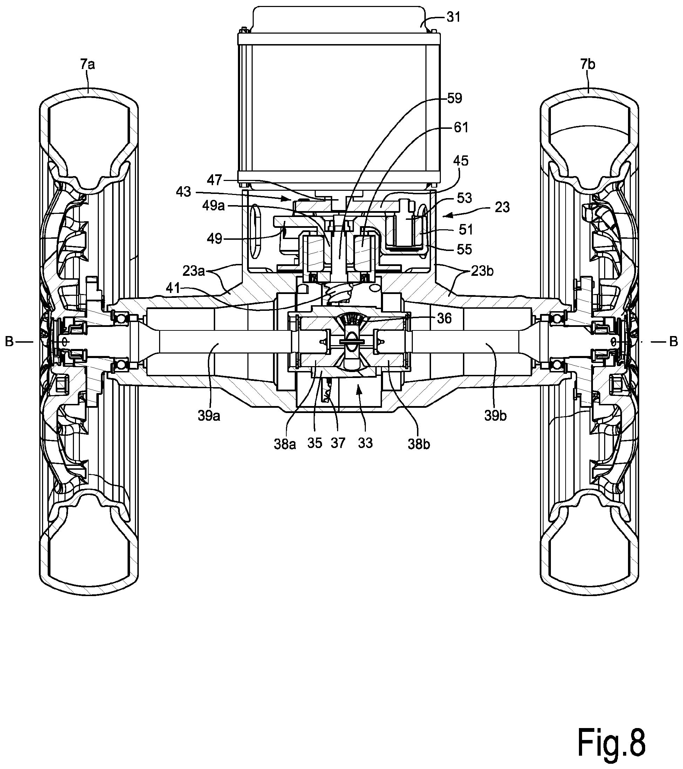

A differential 33 is provided inside the casing 23; reference number 35 indicates the housing or planetary carrier thereof, see in particular Fig. 8. A crown gear 37 is integral with the housing 35. In a known manner, inside the housing 35 of the differential 33 one or more planet gears 36 are arranged, typically constituted by bevel gears, mounted idle on respective shafts radial relative to the rotation axis of the crown gear 37. The planet gears engage a left crown wheel 38a and a right crown wheel 38b. The crown wheels 38a, 38b are constituted by bevel gears, respectively integral with a left axle-shaft 39a (see Fig. 1) and a right axle-shaft 39b, whose common rotation axis is the axis B-B. The left axle-shaft 39a transmits the rotary motion to the left rear driving wheel 7a, and the right axle-shaft 39b transmits the rotary motion to the right rear driving wheel 7b.

The rotary motion is transmitted to the housing 35 of the differential 33 by a pinion 41 that is coaxial with the electric motor 31, and whose rotation axis is therefore the axis A-A. In advantageous embodiments, the axis A-A lies on a median plane of the vehicle 1.

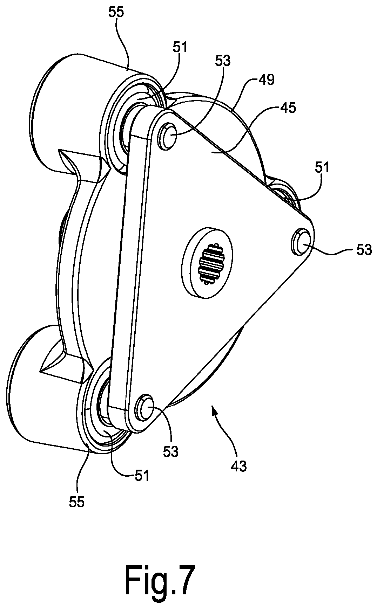

A flexible coupling 43, shown in isolation in Fig. 7, may be provided along the line shaft connecting the electric motor 31 and the pinion 41. In advantageous embodiments, the flexible coupling 43 comprises a first rotating member 45 rotatingly coupled to a drive shaft (output shaft) 47 of the electric motor 31, and a second rotating member 49 rotating around the axis of the drive shaft 47. The first rotating member 45 and the second rotating member 49 are joined by members adapted to damp torsional vibrations. In the illustrated embodiment, the mutual connection between the first rotating member 45 and the second rotating member 49 is provided by damping members interposed between the first rotating member 45 and the second rotating member 49. Just by way of example, the damping members are formed like elastic cylinders 51, inside which pins 53 are fastened, integral with the first rotating member 45 and housed in seats 55 integral to the second rotating member 49. The pins 53 are parallel to the rotation axis A-A of the electric motor 31.

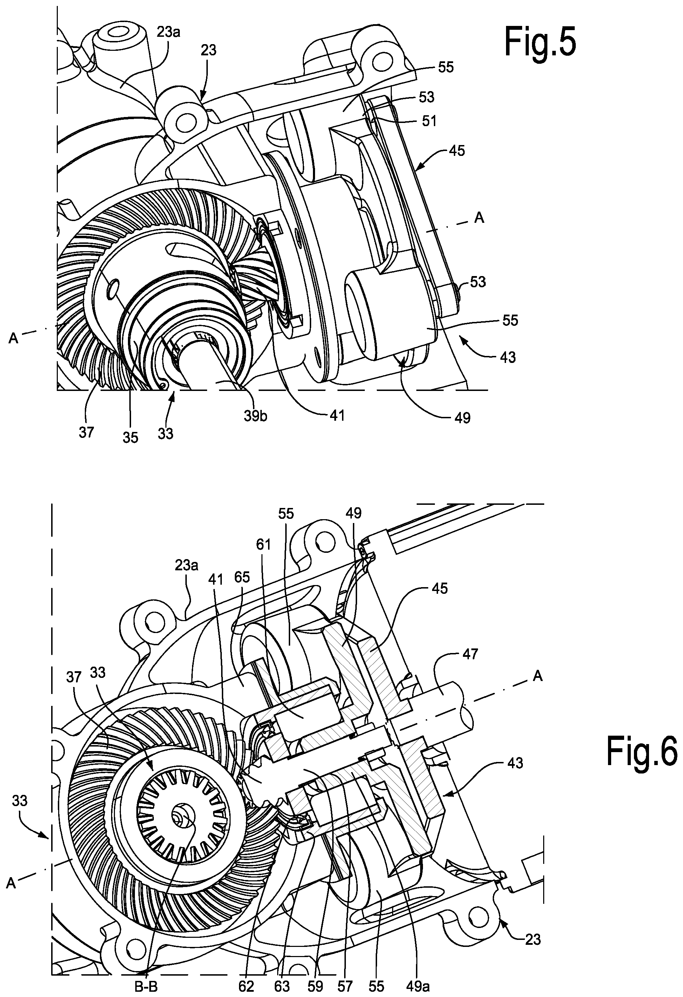

The second rotating member 49 is torsionally coupled to a shaft 59 integral with the pinion 41, for example through a profile provided in a hollow shaft 49a of the second rotating member 49 (see Figs. 6 and 7). Reference number 61 indicates the support members supporting the second rotating member 49 and the shaft 59 of the pinion 41. The support members 61 may be mounted in a sleeve 63 integral with a flange 65 formed by the central body 23c, 23d of the casing 23. In some embodiments, the support members 61 are constituted by only one double-row bearing, for example a double-row ball bearing or preferably a double-row roller bearing, to support bidirectional radial and axial loads.

In advantageous embodiments, a seal 62 is provided between the support members 61 of the rotating member 49 and the bevel gear drive formed by the pinion 41 and by the crown gear 37. Providing the seal 62 in this position is beneficial since the support members 61 are not immersed in lubricant bath.

In this embodiment, the support members 61 of the pinion 41 are therefore arranged along the axis A-A in an intermediate position between the pinion 41 and the first rotating member 45 of the flexible coupling 43. The damping members 53 and the seats 55 thereof are arranged around the support members 61, so as to reduce the axial bulk of the line shaft connecting the electric motor 31 and the pinion 41, to have a compact arrangement of the propulsion unit 9.

The propulsion unit 9, configured in this way, is particularly compact and has a reduced number of components. This results in cost reduction and increased efficiency of the propulsion unit of the invention with respect to prior art electric propulsion units.

In the illustrated embodiment, the vehicle 1 has only one front steered wheel 5. However, it is also possible to provide, with a similar configuration of the propulsion unit 9, a vehicle with two front steered wheels, connected to the frame 3 through a four-bar linkage system allowing the tilting movements of the frame 3.

## Claims

1. A saddle-type vehicle (1) comprising:
- a tilting frame (3);
- at least one steered front wheel (5) supported by the frame (3);
- a propulsion unit (9) comprising:
∘ a casing (23);
∘ inside the casing (23), a differential (33) connected to a left transmission axle-shaft (39a) and to a right transmission axle-shaft (39b), coaxial with each other and both rotating around a rotation axis (B-B); and
∘ integral with the casing (23), an electric motor (31) with a drive shaft (47) with rotation axis (A-A);
wherein: the drive shaft (47) is 90°-oriented with respect to the left axle-shaft (39a) and to the right axle-shaft (39b); the propulsion unit (9) is connected to a left rear driving wheel (7a) through the left axle-shaft (39a) and to a right rear driving wheel (7b) through the right axle-shaft (39b); and the left rear driving wheel (7a), the right rear driving wheel (7b) and the propulsion unit (9) are non-tilting;
**characterized in that:**
the drive shaft (47) is connected to the differential (33) through a shaft line comprising a flexible coupling (43);
the flexible coupling (43) comprises a first rotating member (45) torsionally coupled to the drive shaft (47) and connected, through the interposition of a plurality of damping members (51), to a second rotating member (49) rotatable around the axis (A-A) of the drive shaft (47);
the second rotating member (49) is torsionally coupled to a pinion (41) engaging a crown gear (37) integral with a housing (35) of the differential (33);
the pinion (41) is supported by support members (61) that are installed in the casing (23) and are axially arranged in an intermediate position between the pinion (41) and the first rotating member (45) of the flexible coupling (43); and
the damping members (51) are arranged around the support members (61) of the pinion (41).

2. The vehicle (1) of claim 1, wherein the electric motor (31) is arranged ahead of the left axle-shaft(39a) and the right axle-shaft (31b) with respect to the forwards moving direction (F) of the vehicle (1).

3. The vehicle (1) of claim 1 or 2, wherein the casing (23) of the propulsion unit (9) is connected to the frame (3) of the vehicle (1) by means of a roll joint (25), adapted to allow a rolling movement of the frame (3) with respect to the left rear driving wheel (7a) and to the right rear driving wheel (7b).

4. The vehicle (1) of one or more of claims 1 to 3, wherein the casing (23) of the propulsion unit (9) is connected to the frame (3) by means of a pitching joint (26), adapted to allow a pitching movement of the propulsion unit (9) with respect to the frame (3) around a transverse axis (Y-Y).

5. The vehicle (1) of claim 3, comprising a rear suspension (27) connected at the top to the frame (3) and at the bottom to the roll joint (25).

6. The vehicle (1) of one or more of claims 1 to 5, wherein the rotation axis (A-A) of the drive shaft (47) lies on, or is parallel to, a vertical median plane of the vehicle (1).

7. The vehicle (1) of one or more of the preceding claims, wherein the support members (61) are constituted by only one double-row bearing.

8. The vehicle (1) of one or more of the preceding claims, comprising a seal (62) between the support members and a bevel gear drive formed by the pinion (41) and the crown gear (37).

9. The vehicle (1) of one or more of the previous claims, wherein the casing (23) is constituted by two equal bodies (23a, 23b) coupled to each other along a median plane.

## Patentansprüche

1. Sattelfahrzeug (1) mit:
- einem Neigungsrahmen (3),
- mindestens einem gesteuerten Vorderrad (5), das von dem Rahmen (3) getragen wird,
- einer Antriebseinheit (9) mit:
∘ einem Gehäuse (23),
∘ innerhalb des Gehäuses (23) einem Differenzial (33), das mit einer linken Transmissiosachsen-Welle (39a) und mit einer rechten Transmissiosachsen-Welle (39b) verbunden ist, die koaxial zueinander sind und beide um eine Drehachse (B-B) drehen, und
∘ integral mit dem Gehäuse (23) einem Elektromotor (31) mit einer Antriebswelle (47) mit einer Drehachse (A-A),
wobei die Antriebswelle (47) um 90° mit Bezug auf die linke Achsenwelle (39a) und die rechte Achsenwelle (39b) orientiert ist, wobei die Antriebseinheit (9) mit einem linken hinteren Antriebsrad (7a) durch die linke Achsenwelle (39a) und mit einem rechten hinteren Antriebsrad (7b) durch die rechte Achsenwelle (39b) verbunden ist und wobei das linke hintere Antriebsrad (7a), das rechte hintere Antriebsrad (7b) und die Antriebseinheit (9) nicht neigend sind,
**dadurch gekennzeichnet, dass**:
die Antriebswelle (47) mit dem Differenzial (33) durch eine Wellenlinie verbunden ist, die aufweist
eine flexible Kupplung (43),
wobei die flexible Kopplung (43) ein erstes Drehelement (45) aufweist, das torsionsmäßig mit der Antriebswelle (47) verbunden ist und durch Zwischenfügung einer Anzahl von Dämpfungselementen (51) mit einem zweiten Drehelement (49), das um die Achse (A-A) der Antriebswelle (47) dreht,
wobei das zweite Drehelement (49) torsionsmäßig mit einem Ritzel (41) verbunden ist, das in einen Zahnkranz (37) eingreift, der integral mit einem Gehäuse (35) des Differenzials (33) ist, wobei das Ritzel (41) durch Trägerelemente (61) getragen wird, die in dem Gehäuse (23) installiert sind und axial in einer Zwischenposition zwischen dem Ritzel (41) und dem ersten Drehelement (45 der flexiblen Kupplung (43) angeordnet sind, und wobei die Dämpfungselemente (51) um die Trägerelemente (61) des Ritzels (41) angeordnet sind.

2. Fahrzeug nach Anspruch 1, wobei der Elektromotor (51) oberhalb der linken Achsenwelle (39a) und der rechten Achsenwelle (39b) mit Bezug auf die Vorwärts-Bewegungsrichtung (F) des Fahrzeugs (1) angeordnet ist.

3. Fahrzeug (1) nach Anspruch 1 oder 2, wobei das Gehäuse (23) der Antriebseinheit (9) mit dem Rahmen (3) des Fahrzeugs (1) mittels eines Drehgelenks (25) verbunden ist, das ausgebildet ist, um eine Drehbewegung des Rahmens (3) mit Bezug auf das linke hintere Antriebsrad (7a) und das rechte hintere Antriebsrad (7b) zu ermöglichen.

4. Fahrzeug nach einem oder mehreren der Ansprüche 1 bis 3, wobei das Gehäuse (23) der Antriebseinheit (9) mit dem Rahmen (3) mittels einer Gelenkverbindung (26) verbunden ist, die eine Stampfbewegung der Antriebseinheit (9) mit Bezug auf den Rahmen (3) um eine Querachse (Y-Y) ermöglicht.

5. Fahrzeug (1) nach Anspruch 3, mit einer hinteren Aufhängung (27), die an dem Oberteil mit dem Rahmen (3) und dem Unterteil mit dem Drehgelenk (25) verbunden ist.

6. Fahrzeug nach einem oder mehreren der Ansprüche 1 bis 5, wobei die Drehachse (A-A) der Antriebswelle (47) auf einer vertikalen Mittelebene des Fahrzeugs (1) oder parallel dazu liegt.

7. Fahrzeug nach einem oder mehreren der vorstehenden Ansprüche, wobei die Trägerelemente (61) nur durch ein zweireihiges Lager gebildet sind.

8. Fahrzeug nach einem oder mehreren der vorstehenden Ansprüche mit einer Dichtung (62) zwischen den Trägerelementen und einem Kegelrad-Antrieb, der durch das Ritzel (41) und den Zahnkranz (37) gebildet ist.

9. Fahrzeug nach einem oder mehreren der vorstehenden Ansprüche, wobei das Gehäuse (23) durch zwei gleiche Körper (23a, 23b) gebildet ist, die miteinander entlang einer Mittelebene verbunden sind.

## Revendications

1. Un véhicule du type à selle (1) comprenant :
∘ un cadre inclinable (3) ;
∘ au moins une roue avant directrice (5) supportée par le cadre (3) ;
∘ une unité de propulsion (9) comprenant
∘ un bâti (23) ;
∘ à l'intérieur du bâti (23), un différentiel (33) connecté à un arbre-axe de transmission gauche (39a) et à un arbre-axe de transmission droit (39b), coaxiaux l'un avec l'autre et tournant tous les deux autour d'un axe de rotation (B-B) ; et
∘ solidaire du bâti (23), un moteur électrique (31) avec un arbre d'entraînement (47) ayant un axe de rotation (A-A);
dans lequel : l'arbre d'entraînement (47) est orienté à 90 degrés par rapport à l'arbre-axe gauche (39a) et à l'arbre-axe droit (39b) ; l'unité de propulsion (9) est connectée à une roue motrice arrière gauche (7a) par l'intermédiaire de l'arbre-axe gauche (39a) et à une roue motrice arrière droite (7b) par l'intermédiaire de l'arbre-axe droit (39b) ; et la roue motrice arrière gauche (7a), la roue motrice arrière droite (7b) et l'unité de propulsion (9) ne sont pas inclinables ;
**caractérisé en ce que :**
l'arbre d'entraînement (47) est connecté au différentiel (33) par l'intermédiaire d'une ligne d'arbre comprenant un couplage flexible (43) ;
le couplage flexible (43) comprend un premier organe tournant (45) couplé en torsion avec l'arbre d'entraînement (47) et connecté, par l'interposition d'une pluralité d'organes d'amortissement (51), à un deuxième organe tournant (49) pouvant tourner autour de l'axe (A-A) de l'arbre d'entraînement (47) ;
le deuxième organe tournant (49) est couplé en torsion à un pignon (41) en prise avec un engrenage à couronne (37) solidaire d'un logement (35) du différentiel (33) ;
le pignon (41) est supporté par des organes de support (61) qui sont installés dans le bâti (23) est sont agencés axialement dans une position intermédiaire entre le pignon (41) et le premier organe tournant (45) du couplage flexible (43) ; et
les organes d'amortissement (51) sont agencés autour des organes de support (61) du pignon (41).

2. Le véhicule (1) selon la revendication 1, dans lequel le moteur électrique (31) est agencé devant l'arbre-axe gauche (39a) et l'arbre-axe droit (31b) par rapport au sens de déplacement vers l'avant (F) du véhicule (1).

3. Le véhicule (1) selon la revendication 1 ou 2, dans lequel le bâti (23) de l'unité de propulsion (9) est connecté au cadre (3) du véhicule (1) au moyen d'un joint à croisillon (25), apte à permettre un mouvement de roulement du cadre (3) par rapport à la roue motrice arrière gauche (7a) et à la roue motrice arrière droite (7b).

4. Le véhicule (1) selon l'une ou plusieurs des revendications 1 à 3, dans lequel le bâti (23) de l'unité de propulsion (9) est connecté au cadre (3) au moyen d'un joint de tangage (26), apte à permettre un mouvement de tangage de l'unité de propulsion (9) par rapport au cadre (3) autour d'un axe transversal (Y-Y).

5. Le véhicule (1) selon la revendication 3, comprenant une suspension arrière (27) connectée au sommet du cadre (3) et au bas du joint à croisillon (25).

6. Le véhicule (1) selon l'une ou plusieurs des revendications 1 à 5, dans lequel l'axe de rotation (A-A) de l'axe d'entraînement (47) s'étend sur ou est parallèle à un plan médian vertical du véhicule (1).

7. Le véhicule (1) selon l'une ou plusieurs des revendications précédentes, dans lequel les organes de support (61) sont constitués d'un seul roulement à deux rangées.

8. Le véhicule (1) selon l'une ou plusieurs des revendications précédentes, comprenant un joint d'étanchéité (62) entre les organes de support et un entraînement par engrenage conique formé par le pignon (41) et un entraînement à couronne (37).

9. Le véhicule (1) selon l'une ou plusieurs des revendications précédentes, dans lequel le bâti (23) est constitué de deux corps égaux (23a, 23b) couplés l'un à l'autre le long d'un plan médian.
